# EUROPEAN PATENT APPLICATION

(11) **EP 3 086 617 A1**
(43) Date of publication of application: **26.10.2016**
(21) Application number: 15305625.4
(22) Date of filing: 23.04.2015
(51) Int. Cl.: H04W 84/04, H04W 84/12, H04L 29/12, H04W 76/02

(54) **REPEATING METHOD AND CORRESPONDING COMMUNICATION NETWORK DEVICE, SYSTEM, COMPUTER READABLE PROGRAM PRODUCT AND COMPUTER READABLE STORAGE MEDIUM**

(71) Applicant: Thomson Licensing, 92130 Issy-les-Moulineaux (FR)
(72) Inventor: JEANNE, Ludovic, 35576 Cesson-Sévigné (FR); GRAEF, Lucien, 35576 Cesson-Sévigné (FR); TOSTIVINT, Cyril, 35510 Cesson-Sévigné (FR)
(74) Representative: Huchet, Anne

(57) **Abstract**

The present disclosure relates to a method, to be performed in a communication network device for repeating data received in at least a first frame by forwarding the data in at least a second frame via a first wireless interface operating at a first frequency.

According to an embodiment, the second frame comprises a source address of an address of a transmitter of the first frame when the first frame is received via a wireless interface operating at a frequency different from the first frequency, or via a wired interface.

## Description

### 1. Technical field

The present disclosure relates to the field of communication network devices, like repeater devices, allowing coverage extension of a network, and notably to repeater devices comprising wireless interfaces and notably allowing coverage extension of a wireless network.

A repeating method and corresponding communication network device, system, computer readable program product and computer readable storage medium are described.

### 2. Background art

Wireless communication end-devices, for instance smartphones, tablets, personal computers or peripherals like printers, have become widely used nowadays. They may exchange data with other wireless communication devices inside a wireless network, for instance a wireless local area network (WLAN), either directly or thanks to an intermediary, or "bridge", device. Access to another network is often provided to a wireless communication device thanks to a network interconnection device (or "gateway"), comprising a wireless communication interface, like WIFI® or Bluetooth interface, and a communication interface to the other network (for instance a wide area network (WAN), such as an internet type network).

In order to extend the coverage area of the wireless network, a communication device (called a "repeater" or "extender") may be used as an intermediate device between two devices communicating by wireless means, in order to receive the frames transmitted from one device and to transmit them to the other device, and vice-versa. Repeaters are notably used for improving exchanges between gateway and end-devices.

In many network environments, like according to WIFI or Ethernet protocol, a device is uniquely identified by its Media Access Control (MAC) address, referring to the "data link layer" (also called "level 2 layer") of the OSI (Open Systems Interconnection) model.

When a client device, identified by its MAC address, connects to a conventional wireless repeater configured in "bridge" mode, the repeater usually creates a "virtual client" (or "proxy client") having a different MAC address than the client MAC address in order to dialog with the gateway.

This MAC address translation is performed in order to avoid collision. Indeed, Wireless Network communication protocols often make use of acknowledgment mechanisms in order to be sure, at the transmitter side, that a transmitted frame has effectively been received by its destination device. Once a frame is received, the destination device replies by a message to the transmitter of the frame, in order to acknowledge the reception.

Without a MAC address translation, if a wireless client device is located in the common coverage area of the gateway and the repeater, it may happen that a frame transmitted to the client device by the gateway is received both by the repeater (for retransmission to the client device) and, directly, by the client device. Thus, as the response time for acknowledgment is then determined by the protocol (like by the value of the variable "Short Interval Frame Space" (SIFS) according to Wi-Fi protocol), two acknowledgement frames will be emitted at the same time (one by the client device and one by the repeater), leading to a collision of the two acknowledgement frames. Thus, as the acknowledgements will be lost, the frame sent by the gateway will be considered, on the gateway side, as not being received by its destination.

Because of the MAC address translation mechanism implemented in the repeater, the only receiver of a frame transmitted from the gateway is the virtual client and, as a consequence, only one acknowledgment is sent to the gateway. There is no data collision and the acknowledgement is properly received.

However, MAC address translation has drawbacks.

In particular, the MAC address translation raises the number of operations to be performed when a new client device is discovered by the repeater. As a consequence, the complexity of the discovery phase and the time needed for a client device to be connected to the wireless repeater increases.

Furthermore, the gateway will receive frames with two different source MAC addresses initially emitted by a client device, depending on whether they are received directly from the client device or relayed by the repeater.

If a client device is first communicating with the gateway via the repeater, it is known by its translated MAC address by the gateway. If the client device then roams from the Wi-Fi repeater to the gateway, the gateway receives, directly, a frame sent from the client device with a source MAC address being the actual, non-translated, MAC address of the client device. Thus, the gateway detects the roaming client as being a new device. Therefore, if the gateway is configured as hosting a DHCP (for "Dynamic Host Configuration Protocol") server, providing each of its client devices with a different Internet Protocol (IP) address for instance, it provides a new IP address to the roaming client device.

As a consequence, according to the solutions of the prior art, all active IP connections of a client device, at the time of the roaming of the client device, are lost after the roaming of the client device.

So, there's a need to provide a solution that improves the user experience of a user of a wireless client device compared to prior art solutions.

### 3. Summary of the present disclosure.

The present principles enable at least one of the above disadvantages to be resolved by proposing a method, to be performed in a communication network device for repeating data received in at least a first frame by forwarding said data in at least a second frame via a first wireless interface operating at a first frequency.

According to an embodiment of the present disclosure, said second frame comprises a source address of an address of a transmitter of said first frame when said first frame is received via a wireless interface operating at a frequency different from said first frequency, or via a wired interface.

According to an embodiment of the present disclosure, said first wireless interface is associated to a wireless device.

Notably, according to some embodiments, said method is performed in a repeater inside a communication network comprising a plurality of communication devices, said repeater being adapted to operate via a plurality of wireless interfaces in a plurality of frequency bands, and said method comprises:
associating one of said wireless interfaces, operating at a first frequency of said frequency bands with a wireless device of said plurality of communication devices;
receiving a first frame comprising data to be repeated to said wireless device;
transmitting data comprised in said first frame in a second frame comprising a source address equal to an address of a transmitter of said first frame when said first frame is received via a first wireless interface of said wireless interfaces in a frequency band different from said first frequency band, or via a wired interface of said repeater.According to an embodiment of the present disclosure, said method further comprises transmitting said data comprised in said first frame in a second frame comprising a source address different from said transmitter address of said first frame when said first frame is received via a second wireless interface operating at said first frequency.

According to an embodiment of the present disclosure, said method further comprises, prior to said receiving of said first frame, when said first frame is received by said second wireless interface:
receiving an association request from said transmitter of said first frame, via said second wireless interface,
creating a virtual client inside said communication network device, identified by a virtual address being different from an address of said transmitter.

According to an embodiment of the present disclosure, said method further comprises, prior to said receiving of said first frame, when said first frame is received by said first wireless interface:
receiving an association request from said transmitter of said first frame, via said first wireless interface;
creating a virtual client inside said communication network device, identified by a virtual address being assigned a value of an address of said transmitter.

According to an embodiment of the present disclosure, said method further comprises creating a virtual client identified by a virtual address being assigned a value of an address of a transmitter of said first frame, when said first frame is received via a wired interface of said communication network device.

According to an embodiment of the present disclosure, the source address of said second frame is said virtual address of said virtual client.

According to an embodiment of the present disclosure, said first and/or said second frame is a WIFI frame.

According to an embodiment of the present disclosure, said first and/or said second frame is an Ethernet frame.

According to another aspect, the present disclosure relates to a communication network device comprising at least a processor configured for repeating data received in at least a first frame by forwarding said data in at least a second frame via a first wireless interface operating at a first frequency.

According to an embodiment of the present disclosure, said second frame comprises a source address of an address of a transmitter of said first frame when said first frame is received via a wireless interface operating at a frequency different from said first frequency, or via a wired interface.

While not explicitly described, the communication network device of the present disclosure can be adapted to perform the repeating method of the present disclosure in any of its embodiments.

According to another aspect, the present disclosure relates to a system comprising a communication network device comprising at least a processor configured for repeating data received in at least a first frame by forwarding said data in at least a second frame via a first wireless interface operating at a first frequency.

According to an embodiment of the present disclosure, said second frame comprises a source address of an address of a transmitter of said first frame when said first frame is received via a wireless interface operating at a frequency different from said first frequency, or via a wired interface.

According to an embodiment of the present disclosure, said system further comprises a wireless device and said processor is configured for associating said first wireless interface to said wireless device.

According to an embodiment of the present disclosure, said wireless device is at least one device selected from the group consisting of:
- a gateway;
- a repeater;
- a router.

According to an embodiment of the present disclosure, said wireless device comprises a DHCP server.

While not explicitly described, the present embodiments related to a repeating method or to the corresponding communication network device or system can be employed in any combination or sub-combination. For example, some embodiments can involve a communication device receiving data in a first frame being an Ethernet frame and forwarding said data in a second frame being a WIFI frame. The processor of the communication device can be configured for associating said first wireless interface to a wireless device being a gateway and comprising a DHCP server.

According to another aspect, the present disclosure relates to a non-transitory program storage device, readable by a computer.

According to an embodiment of the present disclosure, said non-transitory computer readable program product tangibly embodies a program of instructions executable by a computer to perform the method described above, in any of its embodiments.

According to another aspect, the present disclosure relates to a computer readable storage medium carrying a software program comprising program code instructions for performing the method of the present disclosure, in any of its embodiments, when said non transitory software program is executed by a computer.

As will be appreciated by one skilled in the art, aspects of the present disclosure can be embodied as a system, method, or computer readable medium. Accordingly, aspects of the present disclosure can take the form of an hardware embodiment, a software embodiment (including firmware, resident software, micro-code, and so forth), or an embodiment combining software and hardware aspects that can all generally be referred to herein as a "circuit", module" or "system". Furthermore, aspects of the present disclosure can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage mediums to which the present disclosure can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it will be appreciated by those skilled in the art that the block diagrams presented herein represent conceptual views of illustrative system components and/or circuitry of some embodiments of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

### 4. List of drawings.

The present disclosure will be better understood, and other specific features and advantages will emerge upon reading the following description, the description making reference to the annexed drawings wherein:
- Figure 1a shows an example of a wireless distribution system according to a particular embodiment of the present disclosure;
- Figure 1b illustrates a view of exchanges of frames, via a repeater, between some devices of the distribution system of the present disclosure, when the frequency bands used by the devices to communicate with the repeater are different or when one of the communication device is connected to the repeater via a wired connection;
- Figure 2 is a functional diagram that illustrates a particular embodiment of the repeating method of the present disclosure, compatible with the embodiment illustrated by figures 1a and 1b;
- Figure 3 illustrates a repeater adapted to at least one particular embodiment of the present disclosure.

It is to be noted that the drawings have only an illustration purpose and that the embodiments of the present disclosure are not limited to the illustrated embodiments.

### 5. Detailed description of the embodiments.

At least one embodiment of the present disclosure offers a new way of transmitting frames, for a repeater device comprising wireless interfaces, inside a communication network also comprising a plurality of communication devices, at least one of those communication device being a wireless device.

During the retransmission of data, received in a first frame from a wireless communication device, to the wireless device, the repeater transmits the data in a second frame comprising a field representing the address of the transmitter of the second frame having the value of the address of the transmitter of the first frame, when the frequency used for exchanging frames with both devices are different. Indeed, in such a situation, a frame transmitted by one of the devices at one frequency will not be received by the other device operating at another frequency. As a consequence, as only one acknowledgment will be transmitted, no collision of acknowledgment will occur.

Similarly, as there is no risk of collision of acknowledgments when a communication device uses a wired interface to communicate with the repeater, the repeater transmits, to the wireless device, data contained in a first frame received via a wired interface in a second frame comprising a field representing the address of the transmitter of the second frame having the value of the address of the transmitter of the first frame.

Notably, in some embodiments, when data is received from a communication interface, unknown from the repeater, the method comprises a creation of a virtual client with a virtual address obtained by a conditional application of an address translation algorithm. In the case where no translation algorithm is applied, a virtual client is created with the source address of the unknown communication interface. Thus, in at least some of its embodiments, the present disclosure proposes a solution that is simpler and time saving when the frequencies used by the communication interfaces of both devices are different or when one is a wired interface.

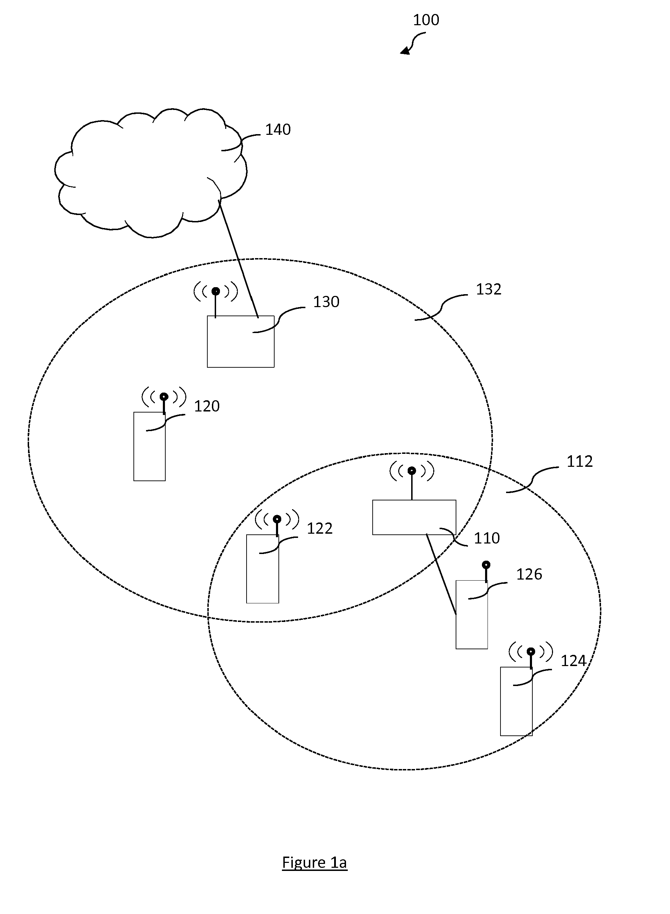

In the detailed embodiment illustrated in **figure 1a****,** a wireless distribution system 100 is described.

The system, for instance a Wi-Fi distribution system, comprises a repeater 110 (for instance a set-top box with at least a Wi-Fi interface), and communication devices, notably a network interconnection device 130 (for instance a gateway, another Wi-Fi repeater, or a Wi-Fi router), and wireless client devices 120, 122, 124 (for instance mobile devices such as, but not limited to, smart phones or tablets). It can also comprise wired client devices 126, connected for instance via a wired interface to the Wi-Fi repeater.

The repeater 110 can be associated, as a client to the network interconnection device 130.

A client device 120, 122 can be located in a coverage area 132 of the network interconnection device. It can also be located in a coverage area 112 of the repeater 110 (like client devices 122, 124 of figure 1a).

In the illustrated embodiment, the gateway, the Wi-Fi repeater and the client devices exchange data inside said network in frames comprising a source address, identifying a transmitter of the frame. (For instance, for a Wi-Fi frame, this source address can be the field "address 2" of the Wi-Fi frame).

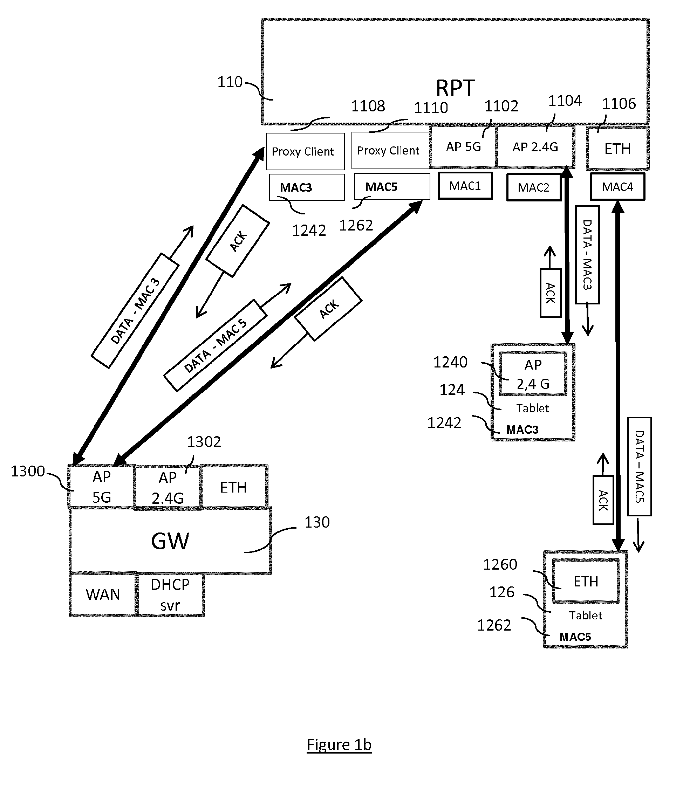

In the illustrated embodiment, the network interconnection device 130 is a gateway, also acting as a DHCP server, connected to another network 140 (for example a network of an internet access provider) over a WAN interface, and equipped with other communication interfaces, notably a Wireless communication interface, like a Wi-Fi Access Point, operating in at least a first frequency, for instance at 5 GHz as illustrated in **figure 1b** (like the access point with reference 1300).

The DHCP Server of the gateway 130 can assign to each client device an IP address, enabling the unique designation of an interface with the network 140 using the Internet Protocol.

The Wi-Fi repeater, in this example, is a dual band repeater. One skilled in the art can appreciate that the techniques disclosed herein can also be applied where more than two bands of operating frequencies are utilized. In the illustrated embodiment of **figure 1b**, the Wi-Fi repeater 110 comprises different communication interfaces, and notably two Wireless interfaces operating at different frequencies:
- a first Wi-Fi Access Point 1104 operating at 2.4 GHz ;
- A second Wi-Fi Access Point 1102 operating at 5 GHz.

At least one of those different frequencies corresponds to an operating frequency of a Wi-Fi Access Point of the gateway.

In the illustrated embodiment of figure 1b, the Wi-Fi repeater 110 also comprises at least a wired interface, for instance an Ethernet interface 1106.

The repeater 110 is connected (as a client) to an access point 1300 of the gateway 130 by a wireless connection involving an Wi-Fi access point 1102 of the Wi-Fi repeater operating as the same frequency as the access point of the gateway. For instance, the 5 GHz second Access Point 1102 of the repeater 110 is connected to the 5 GHz Access Point 1300 of the gateway 130. This may be achieved by creating virtual clients on the repeater.

A client device 124 (for instance a tablet) can request a connection to the Wi-Fi repeater 110 using the first Wi-Fi access point 1104 of the repeater 110 (operating at a different frequency than the Wi-Fi access point 1300 of the gateway 130 in the illustrated embodiment), or the second Wi-Fi access point 1102 of the repeater (operating at the same frequency as the Wi-Fi access point 1300 of the gateway 130 in the illustrated embodiment). A client device 126, comprising an Ethernet interface 1260, can also be linked to the repeater 110 via an Ethernet interface 1106 of the repeater. It is to be noted that figure 1b is a simplified illustration, for purpose of clarity. For instance, client devices 120, 122 of figure 1a are not illustrated.

In the embodiment shown, where a wireless protocol of Wi-Fi type is used, each wireless access point is identified by a string of alphanumerical characters, such as an SSID

(Service Set Identifier). It is also identified by a MAC address, which makes it possible to guarantee a unique identification of each access point. A MAC address can also be used to identify an Ethernet interface of a communication device.

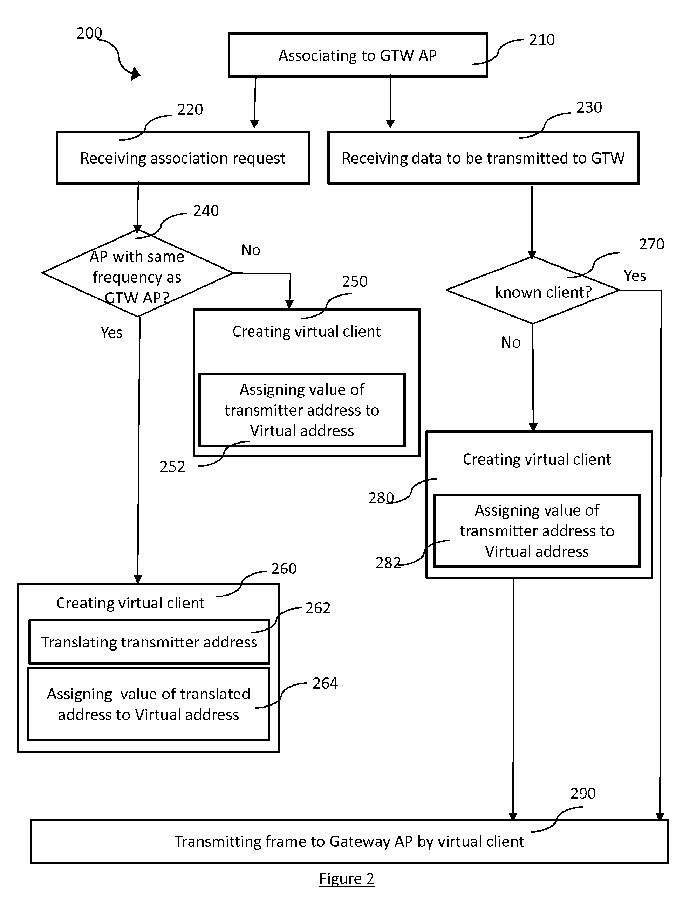

Figure 2 shows the repeating method 200 of the present disclosure, in a particular embodiment, implemented in the WIFI repeater 110.

According to the detailed embodiment, as illustrated by figures 1b and 2, the repeating method comprises an associating 210 of the repeater 110 with an access point 1300 of the gateway 130. Depending on the embodiments, and notably depending on the access points of the gateway, the Wi-Fi access points of the repeater involved in this associating can differ. In some embodiments, only one wireless access point of the repeater is associated with an access point of the gateway. In other embodiments (which includes for instance an algorithm, like a spanning tree algorithm, in order to avoid unwilling loops), several wireless access points of the repeater can be associated respectively with different access points of the gateway. Such embodiments can permit the repeater to choose dynamically the best path to be used with the gateway.

The associating 210 can be performed for instance during a boot and/or an initialization of the repeater and/or the gateway.

The method of the present disclosure also comprises receiving 220, 230 a frame sent by a client device 124, 126 (for instance a DHCP request), comprising an address of its transmitter (for instance, in the particular embodiment described, a MAC address (MAC3, MAC 5) 1242, 1262 of its transmitter 124, 126).

The received frame can, for instance, comprise data to be transmitted to the gateway, or data to the attention of the repeater itself, like an association request when the fame is received via a wireless interface of the repeater.

In the illustrated embodiment, when receiving 220 a frame (via a wireless interface) corresponding to a request from a transmitter to be associated with the repeater, the method comprises creating a virtual client, corresponding to the transmitter, and having a virtual address.

According to the illustrated embodiment, the way the virtual client device is created can depend 240 on the frequency of the transmission channel used by the receiving access point (1102, 1104), as compared to the frequency of the transmission channel used by the gateway access point 1300.

If the receiving Wi-Fi access point 1104 of the repeater 110 (and thus the access point 1240 of the device 124) uses a frequency different than the one used by the access point 1300 of the gateway 130, then the method comprises creating 250 a virtual client 1108 (or proxy client) for the transmitter, said creating 250 comprising assigning 252 to the virtual address of the virtual client the value of the MAC address 1242 of the client device 124.

If the receiving interface of the repeater is a Wi-Fi access point 1102 operating at the same frequency as the one used by the access point 1300 of the gateway 130 to which the repeater 110 is connected, then the method comprises creating 260 a virtual client (or proxy client) for the transmitter, said creating 260 comprising translating 262 the MAC address (MAC3) 1242 of the transmitting access point 1240 of the device 124. This translating results in a translated address, different from the address 1242 of the transmitting access point.

The creating 260 also comprises assigning 264 to the virtual address of the virtual client the value of the translated address.

When receiving 230 data to be transmitted to the gateway, in a frame comprising an address of a transmitter, the transmitter may correspond or not (270) to an already created virtual client of the repeater. For instance, a virtual client may have already been created if in association request has already been received or if a previous frame has already been received via the wired interface.

In the illustrated embodiment, when data is received via a wired interface from an unknown transmitter, the method comprises creating 280 a virtual client 1110 associated to the transmitter and having a virtual address, the creating 280 comprising assigning 282 to the virtual address of the virtual client the value of the MAC address 1262 of the wired interface 1260 of the client device 126.

Once a virtual client has been created 270, or when the transmitter corresponds to an already created (or known) virtual client, the method further comprises transmitting 290 the received data to the access point 1300 of the gateway 130 to which the repeater 110 is connected thanks to the virtual client.

In the illustrated embodiment, the data contained in the received frame is transmitted 290 in a Wi-Fi frame having a header comprising the MAC address of the virtual client in its source address field.

In the particular case where the data transmitted to the gateway is a DHCP request, the gateway 130 (acting as a DHCP server) will reply with an ACK message, comprising an IP address attributed according to the MAC address of the virtual client.

More precisely, if the Wi-Fi client 124 roams from the repeater 110 to the gateway 130, when the gateway 1300 has already received a DHCP request from the virtual client device 1108, and makes a DHCP request received directly by the gateway 130, the request will contain the MAC address MAC3 1242 of the client device 124.

According to the illustrated embodiment, when the client device 124 is a wireless device operating at a different frequency than the gateway, the virtual client 1108 is assigned the MAC address 1242 of the client device 124.

As the MAC address 1242 of the client device 124 is the same MAC address 1242 as the virtual client device 1108, which is already known from the gateway 130 (acting as a server DHCP), the DHCP module of the gateway allocates the same IP address (previously attributed to the virtual client device) to the client device 124.

Thus, if some IP connections were already initiated at the time of the roaming of the client device 124, they are not disrupted by the roaming (as is the case when an address translation algorithm is applied).

If the client device 124 is connected directly to the gateway 130 and roams to the coverage area of the repeater 110, and the repeater assigns to the virtual client 1108 the client device MAC source address, the gateway will attribute to the virtual client the same IP address as the one attributed to the client device. Thus, no disruption of IP connection of the client device is generated either. This is especially useful in the case of a client device being a mobile terminal in the neighborhood of different access points while being moved.

In some of the above embodiments, the presence of the repeater is transparent to the exchanges between the gateway and the client device, at an "IP address "level.

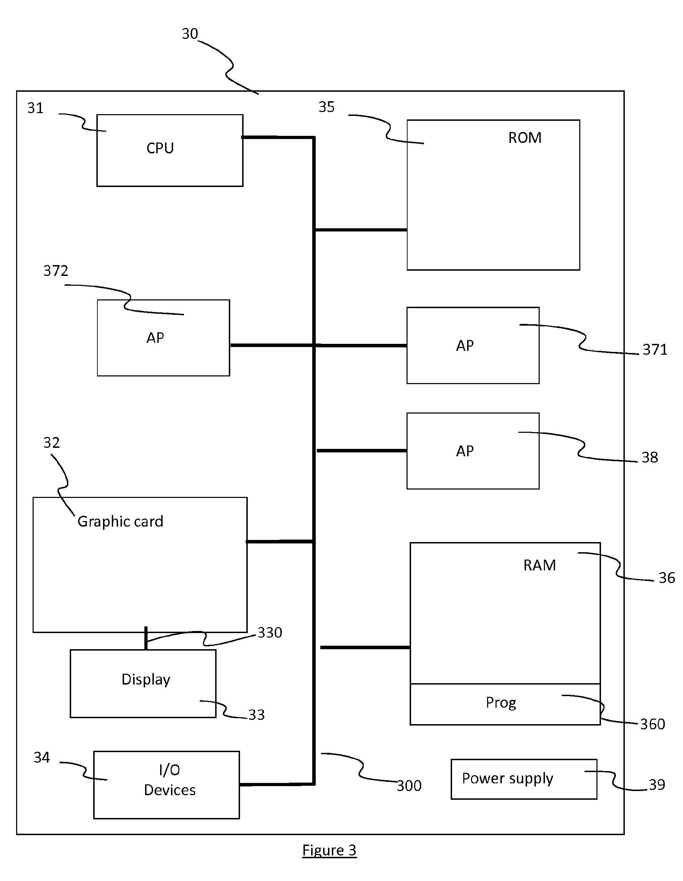

**Figure 3** describes the structure of a communication network device 30, such as the repeater 110 illustrated in figures 1a and 1b. This device can be a Wi-Fi repeater device.

In the particular embodiment of figure 3, the repeater 30 can comprise the following devices, linked together via a data and address bus 300, which can also carry a timer signal:
- a micro-processor 31 (or CPU) ;
- a graphics card 32 (depending on embodiments, such a card may be optional);
- at least one Input/ Output module 34, (like a keyboard, a mouse, a led, and so on);
- a ROM (or « Read Only Memory ») 35 ;
- a RAM (or « Random Access Memory ») 36 ;
- two communication interfaces 371, 372 configured for the reception and/or transmission of data, via a wireless connection (notably of type WIFI® or Bluetooth) at a first frequency;
- a wired communication interface 38;
- a power supply 39.

In some embodiments, the repeater 30 can also comprise, or be connected to, a display module 33, for instance a screen, directly connected to the graphics card 32 by a dedicated bus 330. In a variant, the display can be external to the electronic device 30. In some embodiments, the repeater 30 can communicate with the display 33 thanks to a wireless interface. In other embodiments, the repeater 30 can communicate with the display thanks to a wired interface, like a cable transmitting display signals. The repeater 30 can comprise a connector (not illustrated) or a transmitting module adapted to transmit a display signal to an external display apparatus like an LCD or plasma screen or a video projector.

Each of the mentioned memories can comprise at least one register, that is to say a memory zone of low capacity (a few binary data) or high capacity (with a capability of storage of a whole program or of all or part of data representative of data to be calculated or displayed).

When the repeater is powered on, the microprocessor 31 loads the program instructions 360 in a register of the RAM 36, notably the processes needed for performing at least one embodiment of the retransmitting method described herein, and executes the program instructions.

According to a variant, the repeater 30 comprises several microprocessors.

According to another variant, the power supply 39 is external to the repeater 30.

In the particular embodiment illustrated in figure 3, the microprocessor 31 can be configured for repeating data received in at least a first frame by forwarding the data in at least a second frame via a first wireless interface operating at a first frequency.

In the particular embodiement described, the second frame comprises a source address of an address of a transmitter of the first frame when the first frame is received via a wireless interface operating at a frequency different from the first frequency, or via a wired interface.

The communication network device 30 can notably belong to a system further comprising a wireless device and the microprocessor 31 can be configured for associating the first wireless interface to the wireless device.

The present disclosure has been described in relation with a WIFI distribution system.

Of course, as it will be understandable for a person skilled in the art, the present disclosure may also been applied in wireless distribution system using other network protocols, notably network protocols with acknowledgment of frames, like WIFI, WiMAX, or Bluetooth protocols.

## Claims

1. A method, to be performed in a communication network device for repeating data received in at least a first frame by forwarding said data in at least a second frame via a first wireless interface operating at a first frequency,
wherein said second frame comprises a source address of an address of a transmitter of said first frame when said first frame is received via a wireless interface operating at a frequency different from said first frequency, or via a wired interface.

2. The method according to claim 1 wherein said method further comprises transmitting said data comprised in said first frame in a second frame comprising a source address different from said transmitter address of said first frame when said first frame is received via a second wireless interface operating at said first frequency.

3. The method according to claim 2 wherein said method further comprises, prior to said receiving of said first frame, when said first frame is received by said second wireless interface:
receiving an association request from said transmitter of said first frame, via said second wireless interface,
creating a virtual client inside said communication network device, identified by a virtual address being different from an address of said transmitter.

4. The method according to at least one of claims 1 to 3 wherein said method further comprises, prior to said receiving of said first frame, when said first frame is received by said first wireless interface:
receiving an association request from said transmitter of said first frame, via said first wireless interface;
creating a virtual client inside said communication network device, identified by a virtual address being assigned a value of an address of said transmitter.

5. The method according to at least one of claims 1 to 4 wherein said method further comprises creating a virtual client identified by a virtual address being assigned a value of an address of a transmitter of said first frame, when said first frame is received via a wired interface of said communication network device.

6. The method according to at least one of claims 3 to 5 wherein the source address of said second frame is said virtual address of said virtual client.

7. The method according to at least one of claims 1 to 6 wherein said first and/or said second frame is a WIFI frame.

8. The method according to at least one of claims 1 to 7 wherein said first and/or said second frame is an Ethernet frame.

9. A communication network device comprising at least a processor configured for repeating data received in at least a first frame by forwarding said data in at least a second frame via a first wireless interface operating at a first frequency,
wherein said second frame comprises a source address of an address of a transmitter of said first frame when said first frame is received via a wireless interface operating at a frequency different from said first frequency, or via a wired interface.

10. A system comprising a communication network device comprising at least a processor configured for repeating data received in at least a first frame by forwarding said data in at least a second frame via a first wireless interface operating at a first frequency, wherein said second frame comprises a source address of an address of a transmitter of said first frame when said first frame is received via a wireless interface operating at a frequency different from said first frequency, or via a wired interface.

11. The system according to claim 10 wherein said system further comprises a wireless device and said processor is configured for associating said first wireless interface to said wireless device.

12. The system according to claim 11 wherein said wireless device is at least one device selected from the group consisting of:
- a gateway;
- a repeater;
- a router.

13. The system according to claim 11 or 12 wherein said first wireless device comprises a DHCP server.

14. A non-transitory computer readable program product, **characterized in that** it comprises program code instructions for performing the method according to at least one of claims 1 to 9, when said non-transitory software program is executed by a computer.

15. Computer readable storage medium carrying a software program **characterized in that** it comprises program code instructions for performing the method according to at least one of claims 1 to 9, when said non-transitory software program is executed by a computer.
